# EUROPÄISCHE PATENTSCHRIFT

(11) **EP 3 308 937 B1**
(45) Veröffentlichungstag und Bekanntmachung des Hinweises auf die Patenterteilung: **10.11.2021**
(21) Anmeldenummer: 17001602.6
(22) Anmeldetag: 27.09.2017
(51) Int. Cl.: B29C 45/66

(54) **KNIEHEBEL-SCHLIESSEINHEIT EINER KUNSTSTOFFVERARBEITUNGSMASCHINE, INSBESONDERE EINER SPRITZGIESSMASCHINE**
TOGGLE CLOSING UNIT OF A PLASTICS PROCESSING MACHINE, IN PARTICULAR AN INJECTION MOLDING MACHINE
DISPOSITIF DE FERMETURE À GENOUILLÉRE D'UNE MACHINE DE TRAITEMENT DE MATIÈRE PLASTIQUE, NOTAMMENT MACHINE Á MOULER PAR INJECTION

(30) Priorität: 11.10.2016 DE 102016012025
(43) Veröffentlichungstag der Anmeldung: 18.04.2018
(73) Patentinhaber: Wittmann Battenfeld GmbH, 2542 Kottingbrunn (AT)
(72) Erfinder: Lechner, Andreas, A-2563 Pottenstein (AT); Pinter, Jürgen, A-7022 Schattendorf (AT)
(74) Vertreter: Gosdin, Michael

(56) Entgegenhaltungen:
- DE-A1- 10 242 290
- DE-A1-102014 004 379
- JP-A- 2016 022 658
- Anonymous: "Linearführung - Wikipedia", , 2. Oktober 2016 (2016-10-02), Seiten 1-2, XP055425686, Gefunden im Internet: URL:https://de.wikipedia.org/w/index.php?t itle=Linearführung&oldid=158386322 [gefunden am 2017-11-16]

## Beschreibung

Die Erfindung betrifft eine Kniehebel-Schließeinheit einer Kunststoffverarbeitungsmaschine, insbesondere einer Spritzgießmaschine, umfassend eine Stirnplatte und einen relativ zur Stirnplatte beweglich in eine Schließrichtung angeordneten Kreuzkopf, wobei an der Stirnplatte mindestens zwei Hebel gelenkig gelagert sind, wobei die mindestens zwei Hebel gelenkig jeweils mit mindestens einer Lasche verbunden sind, die am Kreuzkopf gelenkig gelagert sind, wobei der Kreuzkopf mit mindestens einer Linearlagerung versehen ist, mit der er relativ zur Stirnplatte in Schließrichtung verschieblich gelagert ist, und wobei die Linearlagerung als Wälzlagerung ausgebildet ist.

Eine solche Lösung ist aus der DE 10 2014 004 379 A1 bekannt. Als Wälzlagerung kommen hier Kugelumlaufspindeln zum Einsatz.

Eine andere Kniehebel-Schließeinheit für eine Kunststoffverarbeitungsmaschine ist aus der DE 20 2015 002 779 U1 bekannt. Zur Führung des Kreuzkopfs in Schließrichtung ist eine Linearführung vorgesehen, die regelmäßig als Gleitlagerung ausgebildet ist. Der Vorteil einer solchen Lagerung und der Grund, warum sie regelmäßig gewählt wird, sind, dass sie sehr resistent gegen Belastungsspitzen ist. Nachteilig ist allerdings, dass sie im Betrieb eine relativ hohe Reibung aufweist und häufig aufwendig geschmiert werden muss.

Weitere Lösungen offenbaren die JP 2016 022658 A und die DE 102 42 290 A1**.**

Der Erfindung liegt daher die **Aufgabe** zugrunde, eine Kniehebel-Schließeinheit der eingangs genannten Art so fortzubilden, dass ein besonders leichtgängiger Betrieb der Schließeinheit möglich wird und zudem der Schmierbedarf reduziert werden kann.

Die **Lösung** dieser Aufgabe durch die Erfindung ist dadurch gekennzeichnet, dass die Linearlagerung zwei Teile mit jeweiligen Laufbahnen für Wälzkörper umfasst, wobei zwischen den beiden Teilen Wälzkörper wirksam angeordnet sind, wobei ein Teil, nämlich ein Führungswagen, mit seiner Längserstreckung in Schließrichtung verlaufend unmittelbar oder mittelbar am Kreuzkopf und ein Teil, nämlich eine Führungsschiene, mit seiner Längserstreckung in Schließrichtung verlaufend unmittelbar oder mittelbar an der Stirnplatte befestigt ist.

Eine besonders bevorzugte Ausführungsform der Erfindung sieht vor, dass ein Teil der Linearlagerung in eine erste Querrichtung, die senkrecht zur Schließrichtung verläuft, elastisch mit dem Kreuzkopf oder mit der Stirnplatte verbunden ist, so dass eine elastische Verformung in erste Querrichtung zwischen dem Teil und dem Kreuzkopf oder der Stirnplatte ermöglicht wird.

Eines der Teile der Linearlagerung, insbesondere ein Führungswagen, ist bevorzugt in erste Querrichtung über erste Federmittel elastisch mit dem Kreuzkopf verbunden. Die ersten Federmittel werden dabei bevorzugt durch einen Abschnitt des Kreuzkopfs gebildet, der mindestens eine in Schließrichtung verlaufende Ausnehmung aufweist. Die ersten Federmittel werden dabei bevorzugt durch zwei Schenkel gebildet, die im Kreuzkopf eingeformt sind und die in Schließrichtung gesehen eine V-förmige oder U-förmige Struktur bilden, wobei im Übergangsbereich der beiden Schenkel das Teil der Linearlagerung angeordnet ist. Hiermit wird der Bereich des Kreuzkopfs, der den einen Teil der Linearlagerung trägt, relativ zu seiner sonstigen Struktur, die sehr steif ist, elastisch, womit es möglich ist, eine Überlastung der Wälzführung zu verhindern.

Dies ist auch das Ziel einer weiteren Fortbildung der Erfindung, wonach vorgesehen ist, dass ein Teil der Linearlagerung in erste Querrichtung über zweite Federmittel elastisch mit der Stirnplatte verbunden ist. Die zweiten Federmittel werden dabei bevorzugt durch eine Zwischenschiene gebildet, die zwischen dem Teil der Linearlagerung und der Stirnplatte angeordnet ist und die in erste Querrichtung eine geringere Federsteifigkeit aufweist als in eine zweite Querrichtung, die senkrecht zur Schließrichtung und senkrecht zur ersten Querrichtung verläuft.

Besonders bevorzugt ist hierbei vorgesehen, dass die Zwischenschiene ein im wesentlichen rechteckiges Querschnittsprofil aufweist; die Dicke der Zwischenschiene in zweite Querrichtung ist dabei bevorzugt mindestens doppelt so groß, vorzugsweise mindestens drei Mal so groß, wie die Dicke der Zwischenschiene in erste Querrichtung.

Besonders bevorzugt ist die Zwischenschiene über Einstellmittel in erste und/oder zweite Querrichtung in ihrer Lage einstellbar an der Stirnplatte angeordnet. Dies erlaubt in einfacher Weise den Ausgleich von Toleranzen. Das vorgeschlagene Konzept stellt also insbesondere auf eine elastisch verformbare Ausführung des Kreuzkopfes in Kombination mit einer ebenfalls elastisch ausgeführten und einstellbaren Führungsbefestigung ab, wodurch die als Wälzlager ausgeführten Linearlager effektiv vor Überlastung geschützt werden können.

Ein weiterer Vorteil ist der geringere Energieverbrauch durch das sehr leichtgängige Linearlager und der reduzierte Schmierbedarf für die Linearführung.

In der Zeichnung ist ein Ausführungsbeispiel der Erfindung dargestellt. Es zeigen:

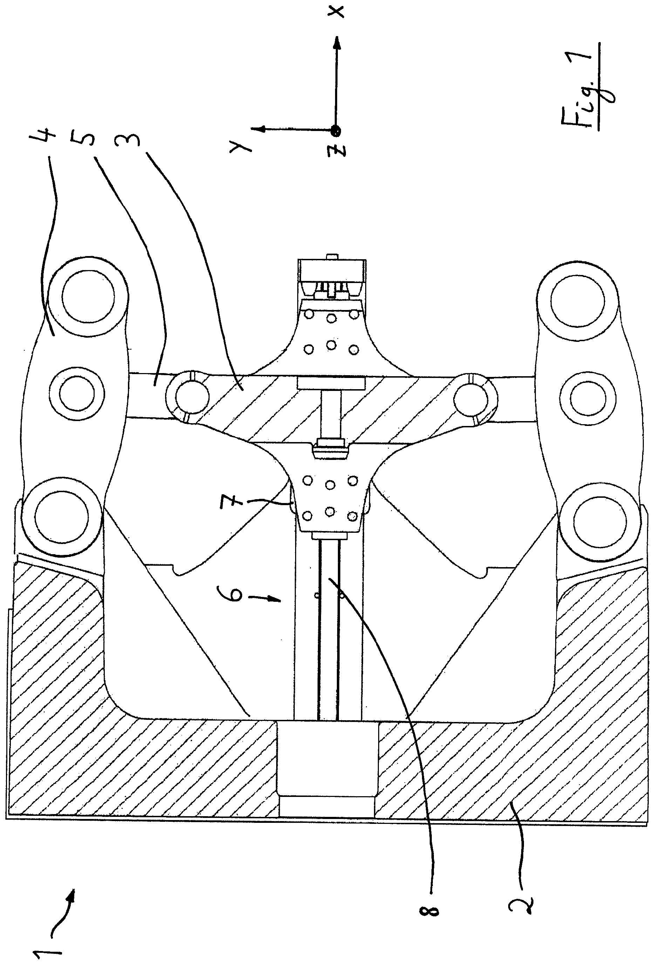

- Fig. 1: die Seitenansicht eines Teils einer Kniehebel-Schließeinheit einer Spritzgießmaschine und
- Fig. 2: die Vorderansicht der einen Hälfte des Teils der Kniehebel-Schließeinheit gemäß Figur 1.

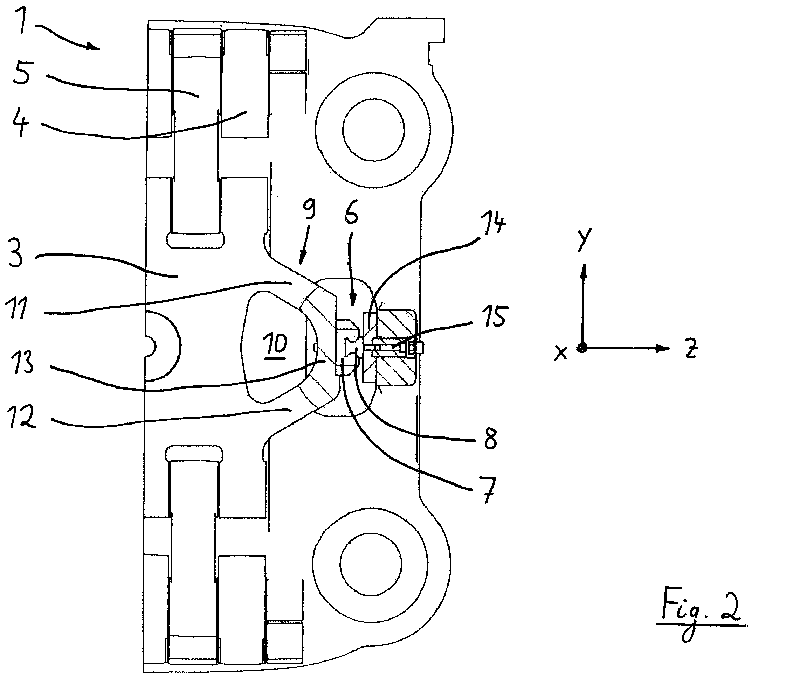

In den Figuren ist ein Teil einer Kniehebel-Schließeinheit 1 einer Spritzgießmaschine zu sehen, wobei in Figur 2 nur die eine Hälfte der symmetrisch zu einer Mittenachse ausgebildeten Einheit dargestellt ist. Die Schließeinheit 1 umfasst eine Stirnplatte 2 sowie einen Kreuzkopf 3, der in eine Schließrichtung x beweglich angeordnet ist. Die Bewegung des Kreuzkopfs 3 in Schließrichtung x kann dabei in beliebiger Weise erfolgen, insbesondere rein elektrisch oder hydraulisch.

Über Hebel 4 und Laschen 5 ist eine gelenkige Verbindung zwischen Stirnplatte 2 und Kreuzkopf 3 hergestellt. Der weitere Aufbau der Schließeinheit 1, auf den es an dieser Stelle jedoch nicht erfindungsrelevant ankommt, geht beispielsweise aus der DE 20 2015 002 779 U1 der Anmelderin hervor, auf die insofern ausdrücklich Bezug genommen wird.

Für einen einwandfreien Betrieb der Schließeinheit 1 muss der Kreuzkopf 3 mittels einer Linearlagerung 6 gelagert werden, wobei im Ausführungsbeispiel je eine Linearlagerung 6 an beiden Seiten des Kreuzkopfs 3 vorgesehen ist (in Figur 2 ist nur die Linearlagerung an der einen Seite des Kreuzkopfs 3 zu sehen).

Wesentlich ist, dass die Linearlagerung 6 als Wälzlagerung ausgebildet ist. Jede Linearlagerung 6 umfasst dabei eine Führungsschiene 8, auf der mindestens ein Führungswagen 7 linear verschieblich läuft (bevorzugt sind zwei Führungswagen 7 auf einer Führungsschiene 8 angeordnet, die in Schließrichtung versetzt am Kreuzkopf 3 befestigt sind). Diese Konzeption der Linearlagerung 6 ist hier als eine solche mit zwei Teilen angesprochen, wobei ein Teil die Führungsschiene 8 und ein Teil der Führungswagen 7 ist. Wie gesagt können aber auch mehrere Führungswagen 7 auf einer Führungsschiene 8 laufen. Erfindungsgemäß ist die Führungsschiene 8 (mittelbar) an der Stirnplatte 2 und der Führungswagen 7 (unmittelbar) am Kreuzkopf 3 befestigt. Sowohl der Führungswagen als auch die Führungsschiene haben jeweilige Laufbahnen für (nicht dargestellte) Wälzkörper; die zwischen den beiden Teilen 7 und 8 angeordneten Wälzkörper sorgen für eine reibungsarme Lagerung bei der Relativverschiebung der beiden Teile 7, 8 in Schließrichtung x.

Damit die Linearlagerung 6, die als Wälzlagerung gegen Belastungsspitzen empfindlicher ist als die vorbekannte Gleitlagerung, nicht unter Belastungsspitzen leidet und im übrigen Toleranzen gut ausgeglichen werden können, ist die nachstehend beschriebene bevorzugte Ausgestaltung vorgesehen:

Der Führungswagen 7 ist zwar unmittelbar am Kreuzkopf 3 befestigt, dieser ist allerdings in seinem seitlichen Bereich, der den Führungswagen 7 trägt, besonders gestaltet, um die Funktion eines ersten Federmittels 9 auszuführen. Hierzu erstreckt sich in Schließrichtung x durch den Kreuzkopf 3 eine Ausnehmung 10 (also ein Hohlraum; es können auch mehrere Hohlräume vorgesehen sein), so das im seitlichen Bereich des Kreuzkopfs zwei Schenkel 11 und 12 stehen bleiben, die über einen Übergangsabschnitt 13 miteinander verbunden sind. Demgemäß kann der Führungswagen 7 in eine erste Querrichtung z, die sich senkrecht zur Schließrichtung x erstreckt, bei Belastungsspitzen einfedern und so die Linearlagerung 6 schonen bzw. schützen.

In ähnlicher Weise ist die Führungsschiene 8 nicht unmittelbar an der Stirnplatte 2 festgelegt, sondern über ein zweites Federmittel 14 in Form einer Zwischenschiene. Diese hat im Querschnitt eine weitgehend rechteckförmige Gestalt und erstreckt sich in die erste Querrichtung z nur mit einer relativ geringen Dicke, indes in einer hierzu senkrechten zweiten Querrichtung y mit einer größeren Dicke. Das hat zur Folge, dass in erste Querrichtung z eine relativ elastische Aufhängung der Führungsschiene 8 gegeben ist, während in zweite Querrichtung y die Führungsschiene 8 wesentlich steifer gehalten wird und so eine gute Führung für den Kreuzkopf 3 bietet.

Die genaue Positionierung der Führungsschiene 8, d. h. namentlich der Zwischenschiene 14 auf der Stirnplatte 2, kann mittels Einstellmitteln 15 bewerkstelligt werden, so dass insbesondere der Toleranzausgleich in einfacher Weise möglich ist.

Vorgesehen ist demnach gemäß dem bevorzugten Ausführungsbeispiel eine an sich bekannte 5-Punkt-Schließeinheit, bei der der Kreuzkopf 3 dazu dient, die Hebel 4 über die Lasche 5 in die Strecklage zu bringen. Der Kreuzkopf 3 kann sowohl hydraulisch als auch elektrisch angetrieben werden; in jedem Fall wird eine Linearbewegung über einen Antrieb ausgeführt.

Wie erläutert, wird bei bekannten Lösungen der Kreuzkopf über Gleitlagersysteme geführt, mit den Nachteilen eines erhöhten Reibwertes, eines höheren Verschleißes und Abriebs; ferner besteht ein erhöhter Schmierbedarf.

Um diese Nachteile zu vermeiden, sieht das vorgeschlagene Konzept vor, den Kreuzkopf 3 über leichtgängige Linearführungen bzw. Linearlagerungen 6 mit geringstem Rollreibwiderstand zu führen.

Durch den Aufbau, der Fertigungstoleranzen und Verformungen beim Schließkraftaufbau kommt es zu relativ großen Belastungen der Linearlagerung in unterschiedlichen Richtungen. Die vorgesehenen Wälz-Linearlager sind weit anfälliger auf Überlast als herkömmliche Gleitlager.

Daher ist die Ausführung des Kreuzkopfes 3 so gestaltet, dass sich dieser bei Lasteinleitung beim Schließkraftaufbau in partiellen Bereichen - nämlich im Bereich der ersten Federmittel 9 - elastisch verformen kann, so dass die Linearlagerungen 6 vor Überlastung geschützt werden.

Gleichzeitig ist für den Toleranzausgleich zwischen Stirnplatte 2 und Kreuzkopf 3 eine verspannungsfreie Einstellmöglichkeit durch die Einstellmittel 15 in der horizontalen x-Richtung vorgesehen. Die einstellbare Zwischenschiene 14, auf der die Führungsschiene 8 montiert ist, ist in der horizontalen x-Achse ebenfalls elastisch verformbar und in der y-Richtung steif ausgeführt, um ein Kippen des Kreuzkopfes 3 abfangen zu können.

### Bezugszeichenliste:

- 1: Kniehebel-Schließeinheit
- 2: Stirnplatte
- 3: Kreuzkopf
- 4: Hebel
- 5: Lasche
- 6: Linearlagerung
- 7: Teil der Linearlagerung (Führungswagen)
- 8: Teil der Linearlagerung (Führungsschiene)
- 9: erste Federmittel
- 10: Ausnehmung
- 11: Schenkel
- 12: Schenkel
- 13: Übergangsbereich der beiden Schenkel
- 14: zweite Federmittel (Zwischenschiene)
- 15: Einstellmittel

- x: Schließrichtung
- z: erste Querrichtung
- y: zweite Querrichtung

## Patentansprüche

1. Kniehebel-Schließeinheit (1) einer Kunststoffverarbeitungsmaschine, insbesondere einer Spritzgießmaschine, umfassend eine Stirnplatte (2) und einen relativ zur Stirnplatte (2) beweglich in eine Schließrichtung (x) angeordneten Kreuzkopf (3), wobei an der Stirnplatte (2) mindestens zwei Hebel (4) gelenkig gelagert sind, wobei die mindestens zwei Hebel (4) gelenkig jeweils mit mindestens einer Lasche (5) verbunden sind, die am Kreuzkopf (3) gelenkig gelagert sind, wobei der Kreuzkopf (3) mit mindestens einer Linearlagerung (6) versehen ist, mit der er relativ zur Stirnplatte (2) in Schließrichtung (x) verschieblich gelagert ist, und wobei die Linearlagerung (6) als Wälzlagerung ausgebildet ist,
**dadurch gekennzeichnet, dass**
die Linearlagerung (6) zwei Teile (7, 8) mit jeweiligen Laufbahnen für Wälzkörper umfasst, wobei zwischen den beiden Teilen (7, 8) Wälzkörper wirksam angeordnet sind, wobei ein Teil (7), nämlich ein Führungswagen, mit seiner Längserstreckung in Schließrichtung (x) verlaufend unmittelbar oder mittelbar am Kreuzkopf (3) und ein Teil (8), nämlich eine Führungsschiene, mit seiner Längserstreckung in Schließrichtung (x) verlaufend unmittelbar oder mittelbar an der Stirnplatte (2) befestigt ist.

2. Kniehebel-Schließeinheit nach Anspruch 1, **dadurch gekennzeichnet, dass** ein Teil (7, 8) der Linearlagerung (6) in eine erste Querrichtung (z), die senkrecht zur Schließrichtung (x) verläuft, elastisch mit dem Kreuzkopf (3) oder mit der Stirnplatte (2) verbunden ist, so dass eine elastische Verformung in erste Querrichtung (z) zwischen dem Teil (7, 8) und dem Kreuzkopf (3) oder der Stirnplatte (2) ermöglicht wird.

3. Kniehebel-Schließeinheit nach Anspruch 2, **dadurch gekennzeichnet, dass** ein Teil (7, 8) der Linearlagerung (6), insbesondere ein Führungswagen, in erste Querrichtung (z) über erste Federmittel (9) elastisch mit dem Kreuzkopf (3) verbunden ist.

4. Kniehebel-Schließeinheit nach Anspruch 3, **dadurch gekennzeichnet, dass** die ersten Federmittel (9) durch einen Abschnitt des Kreuzkopfs (3) gebildet werden, der mindestens eine in Schließrichtung (x) verlaufende Ausnehmung (10) aufweist.

5. Kniehebel-Schließeinheit nach Anspruch 4, **dadurch gekennzeichnet, dass** die ersten Federmittel (9) durch zwei Schenkel (11, 12) gebildet werden, die im Kreuzkopf (3) eingeformt sind und die in Schließrichtung (x) gesehen eine V-förmige oder U-förmige Struktur bilden, wobei im Übergangsbereich (13) der beiden Schenkel (11, 12) das Teil (7) der Linearlagerung (6) angeordnet ist.

6. Kniehebel-Schließeinheit nach einem der Ansprüche 2 bis 5, **dadurch gekennzeichnet, dass** ein Teil (8) der Linearlagerung (6) in erste Querrichtung (z) über zweite Federmittel (14) elastisch mit der Stirnplatte (2) verbunden ist.

7. Kniehebel-Schließeinheit nach Anspruch 6, **dadurch gekennzeichnet, dass** die zweiten Federmittel (14) durch eine Zwischenschiene gebildet werden, die zwischen dem Teil (8) der Linearlagerung (6) und der Stirnplatte (2) angeordnet ist und die in erste Querrichtung (z) eine geringere Federsteifigkeit aufweist als in eine zweite Querrichtung (y), die senkrecht zur Schließrichtung (x) und senkrecht zur ersten Querrichtung (z) verläuft.

8. Kniehebel-Schließeinheit nach Anspruch 7, **dadurch gekennzeichnet, dass** die Zwischenschiene (14) ein im wesentlichen rechteckiges Querschnittsprofil aufweist, wobei die Dicke der Zwischenschiene (14) in zweite Querrichtung (y) mindestens doppelt so groß, vorzugsweise mindestens drei Mal so groß, ist wie die Dicke der Zwischenschiene (14) in erste Querrichtung (z).

9. Kniehebel-Schließeinheit nach Anspruch 7 oder 8, **dadurch gekennzeichnet, dass** die Zwischenschiene (14) über Einstellmittel (15) in erste und/oder zweite Querrichtung (z, y) in ihrer Lage einstellbar an der Stirnplatte (2) angeordnet ist.

## Claims

1. Toggle clamp unit (1) of a plastic processing machine, especially of an injection moulding machine, comprising a front plate (2) and a crosshead (3) which is arranged movable relatively to the front plate (2) in a direction of closing (x), wherein at least two levers (4) are supported articulated at the front plate (2), wherein the at least two levers (4) are each connected articulated with at least one link (5) which links are supported articulated at the crosshead (3), wherein the crosshead (3) is provided with at least one linear bearing (6) by which the crosshead (3) is movably supported relatively to the front plate (2) in the direction of closing (x), and wherein the linear bearing (6) is designed as a roller bearing,
**characterized in that**
the linear bearing (6) comprises two parts (7, 8) with respective tracks for rolling elements, wherein rolling elements are effectively arranged between the two parts (7, 8), wherein one part (7), namely a guiding carriage, is fixed directly or indirectly at the crosshead (3) with its longitudinal extension running in the direction of closing (x) and one part (8), namely a guiding rail, is fixed directly or indirectly at the front plate (2) with its longitudinal extension running in the direction of closing (x).

2. Toggle clamp unit according to claim 1, **characterized in that** one part (7, 8) of the linear bearing (6) is connected elastically with the crosshead (3) or with the front plate (2) in a first transversal direction (z) which is perpendicular to the direction of closing (x) so that an elastic deformation in the first transversal direction (z) between the part (7, 8) and the crosshead (3) or the front plate (2) is enabled.

3. Toggle clamp unit according to claim 2, **characterized in that** one part (7, 8) of the linear bearing (6), especially a guiding carriage, is connected elastically with the crosshead (3) in the first transversal direction (z) via first spring means (9).

4. Toggle clamp unit according to claim 3, **characterized in that** the first spring means (9) are formed by a section of the crosshead (3) which comprises at least one recess (10) which runs in the direction of closing (x).

5. Toggle clamp unit according to claim 4, **characterized in that** the first spring means (9) are formed by two journals (11, 12) which are formed in the crosshead (3) and which form a V-shaped or U-shaped structure, seen in the direction of closure (x), wherein in the transition region (13) of both journals (11, 12) the part (7) of the linear bearing (6) is arranged.

6. Toggle clamp unit according to one of claims 2 to 5, **characterized in that** a part (8) of the linear bearing (6) is elastically connected with the front plate (2) in the first transversal direction (z) via second spring means (14).

7. Toggle clamp unit according to claim 6, **characterized in that** the second spring means (14) are formed by an intermediate rail which is arranged between the part (8) of the linear bearing (6) and the front plate (2) and which has a lower spring stiffness in the first transversal direction (z) than in a second transversal direction (y) which is perpendicular to the direction of closing (x) and to the first transversal direction (z).

8. Toggle clamp unit according to claim 7, **characterized in that** the intermediate rail (14) has a substantial rectangular cross-section profile, wherein the thickness of the intermediate rail (14) is at least twice as high, preferably at least three times as high, in the second transversal direction (y) than the thickness of the intermediate rail (14) in the first transversal direction (z).

9. Toggle clamp unit according to claim 7 or 8, **characterized in that** the intermediate rail (14) is arranged adjustable at the front plate (2) via adjusting means (15) with respect to its position in the first and/or second transversal direction (z, y).

## Revendications

1. Unité de fermeture à genouillère (1) d'une machine d'usinage de matière plastique, notamment d'une machine de moulage par injection, comprenant une plaque frontale (2) et une traverse (3) agencée de manière mobile dans une direction de fermeture (x) par rapport à la plaque frontale (2), au moins deux leviers (4) étant montés de manière articulée sur la plaque frontale (2), les au moins deux leviers (4) étant chacun reliés de manière articulée à au moins une patte (5), qui est montée de manière articulée sur la traverse (3), la traverse (3) étant munie d'au moins un palier linéaire (6), avec lequel elle est montée de manière coulissante dans la direction de fermeture (x) par rapport à la plaque frontale (2), et le palier linéaire (6) étant configuré sous la forme d'un palier à roulement,
**caractérisée en ce que**
le palier linéaire (6) comprend deux parties (7, 8) munies de voies de déplacement respectives pour des corps de roulement, des corps de roulement étant agencés de manière opérationnelle entre les deux parties (7, 8), une partie (7), à savoir un chariot de guidage, étant fixée directement ou indirectement à la traverse (3) en s'étendant avec son étendue longitudinale dans la direction de fermeture (x), et une partie (8), à savoir un rail de guidage, étant fixée directement ou indirectement à la plaque frontale (2) en s'étendant avec son étendue longitudinale dans la direction de fermeture (x).

2. Unité de fermeture à genouillère selon la revendication 1, **caractérisée en ce qu'**une partie (7, 8) du palier linéaire (6) est reliée élastiquement à la traverse (3) ou à la plaque frontale (2) dans une première direction transversale (z), qui s'étend perpendiculairement à la direction de fermeture (x), de telle sorte qu'une déformation élastique dans la première direction transversale (z) entre la partie (7, 8) et la traverse (3) ou la plaque frontale (2) est rendue possible.

3. Unité de fermeture à genouillère selon la revendication 2, **caractérisée en ce qu'**une partie (7, 8) du palier linéaire (6), notamment un chariot de guidage, est reliée élastiquement à la traverse (3) par l'intermédiaire de premiers moyens à ressort (9) dans la première direction transversale (z).

4. Unité de fermeture à genouillère selon la revendication 3, **caractérisée en ce que** les premiers moyens à ressort (9) sont formés par une section de la traverse (3), qui comprend au moins un évidement (10) s'étendant dans la direction de fermeture (x).

5. Unité de fermeture à genouillère selon la revendication 4, **caractérisée en ce que** les premiers moyens à ressort (9) sont formés par deux branches (11, 12), qui sont moulées dans la traverse (3) et qui forment, tel que vu dans la direction de fermeture (x), une structure en forme de V ou en forme de U, la partie (7) du palier linéaire (6) étant agencée dans la zone de transition (13) des deux branches (11, 12).

6. Unité de fermeture à genouillère selon l'une quelconque des revendications 2 à 5, **caractérisée en ce qu'**une partie (8) du palier linéaire (6) est reliée élastiquement à la plaque frontale (2) par l'intermédiaire de deuxièmes moyens à ressort (14) dans la première direction transversale (z).

7. Unité de fermeture à genouillère selon la revendication 6, **caractérisée en ce que** les deuxièmes moyens à ressort (14) sont formés par un rail intermédiaire, qui est agencé entre la partie (8) du palier linéaire (6) et la plaque frontale (2), et qui présente une dureté de ressort plus faible dans la première direction transversale (z) que dans une deuxième direction transversale (y), qui s'étend perpendiculairement à la direction de fermeture (x) et perpendiculairement à la première direction transversale (z).

8. Unité de fermeture à genouillère selon la revendication 7, **caractérisée en ce que** le rail intermédiaire (14) présente un profil de section transversale essentiellement rectangulaire, l'épaisseur du rail intermédiaire (14) dans la deuxième direction transversale (y) étant au moins deux fois plus grande, de préférence au moins trois fois plus grande, que l'épaisseur du rail intermédiaire (14) dans la première direction transversale (z).

9. Unité de fermeture à genouillère selon la revendication 7 ou 8, **caractérisée en ce que** le rail intermédiaire (14) est agencé sur la plaque frontale (2) de manière ajustable au regard de sa position dans la première et/ou la deuxième direction transversale (z, y) par l'intermédiaire de moyens d'ajustement (15).
